Europäisches Patentamt

European Patent Office

Office européen des brevets

(11) Publication number: **0 217 567 B1**

(12) EUROPEAN PATENT SPECIFICATION

(45) Date of publication of patent specification: **08.04.92**

(51) Int. Cl.⁵: **C01B 17/04**, B01J 12/00, B01J 19/00, B01J 8/12

(21) Application number: **86306951.4**

(22) Date of filing: **09.09.86**

(54) Process and apparatus for treating sulphur dioxide-containing gas.

(30) Priority: **13.09.85 JP 201704/85**

(43) Date of publication of application:
**08.04.87 Bulletin 87/15**

(45) Publication of the grant of the patent:
**08.04.92 Bulletin 92/15**

(84) Designated Contracting States:
**DE GB NL**

(56) References cited:
**EP-A- 0 005 948
FR-A- 2 212 290
FR-A- 2 346 288
NL-A- 7 315 509**

(73) Proprietor: **MITSUI MINING COMPANY, LIMITED
1-1, Nihonbashi-Muromachi 2-chome
Chuo-ku Tokyo 103(JP)**

Proprietor: **MITSUI MIIKE ENGINEERING CORPORATION
1, Aza Kayaba Koumachi
Tochigi-shi Tochigi-ken(JP)**

(72) Inventor: **Tsutsumi, Hiroshi
34-203, 8 Ootani-machi Wakamatsu-ku
Kitakyushu-shi Fukuoka-ken(JP)**
Inventor: **Okamura, Morihito
1080, Tamura-cho
Tochigi-shi Tochigi-ken(JP)**
Inventor: **Matsunaga, Osamu
2008-22, Kurai Oohira-machi
Shimotsuga-gun Tochigi-ken(JP)**

(74) Representative: **Allard, Susan Joyce et al
BOULT, WADE & TENNANT, 27 Furnival
Street
London EC4A 1PO(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

1. Field of the Invention

This invention relates to the treatment of sulphur dioxide and particularly to the production of sulphur from gas containing sulphur dioxide. More particularly, it is concerned with treating a gas containing sulpher dioxide to convert it into a composition suitable for the Claus reaction process.

The production of elementary sulphur by a dry process comprising reducing sulphur dioxide sulphur and hydrogen sulphide and then obtaining elementary sulphur using a condenser and a Claus reactor has hitherto been carried out by bringing the gas containing sulphur dioxide ($SO_2$) into contact with a carbonaceous material such as coal, reducing and directly obtaining elementary sulphur, or by reducing $SO_2$ in the gas containing it to form hydrogen sulphide ($H_2S$) and then subjecting the resulting mixture gases of $H_2S$ and $SO_2$ in a proportion of 2 : 1 to the Claus reaction to obtain sulphur.

In these processes, there have been proposed various methods of preparing raw material gases for the Claus reaction. One method comprises contacting a gas containing $SO_2$ with a carbonaceous material to reduce part of the $SO_2$ and thereby adjusting the ratio of $H_2S$ and $SO_2$ to 2 : 1 (Japanese Patent Application OPI (Kokai) No. 167107/1982). Another method comprises dividing a gas containing $SO_2$ into two parts with a volume ratio of 2 : 1, reducing wholly the part with the larger volume to $H_2S$ and mixing this with the other part to adjust the ratio of $H_2S$ and $SO_2$ to 2 : 1 (Japanese Patent Application OPI (Kokai) No. 32307/1981). A third method comprises reducing part or all of the $SO_2$ in the gas containing $SO_2$ to obtain a gas containing an excessive amount of $H_2S$ and then subjecting the gas to partial combustion in a combustion furnace provided according to the method employed in the desulphurization process for the ordinary petroleum refining process to adjust the ratio of hydrogen sulphide and sulphur dioxide to 2 : 1

The above described methods have various disadvantages:

It is difficult to maintain constant a ratio of hydrogen sulphide and sulphur dioxide by controlling the reducing reaction. Moreover, a by-pass is required. A gas containing sulphur dioxide in a high concentration obtained by an $SO_x$ and $NO_x$ removal process using ammonia, contains ammonia in a proportion of up to 1.0 % in some cases. Furthermore, after the reduction of the gas containing $SO_2$ a part of the gas is then fed to a combustion furnace in which the temperature is maintained by the combustion of liquefied petroleum gas. The conversion into sulphur dioxide is achieved by feeding air in an excessive amount, thereby controlling the ratio of $H_2S$ and $SO_2$. It is necessary to install a combustion furnace for controlling the composition: the amount of the gas to be processed is increased because of the use of the excessive air, thus lowering the concentration of the reaction components and the efficiency of the Claus reaction.

SUMMARY OF THE INVENTION

It is an object of the present invention to provide an improved process for the production or extraction of sulphur from a gas containing $SO_2$.

It is a further or alternative object of the present invention to provide an improved process for treating a gas containing $SO_2$ to convert the composition thereof into that suitable for the Claus reaction.

According to one aspect the invention provides a process for treating a gas containing sulphur dioxide, comprising subjecting the gas to a reducing reaction and controlling by oxidation the composition of the gas to render the composition suitable for the Claus reaction.

The invention also provides apparatus for treating a gas containing sulphur dioxide, comprising means for subjecting the gas to a reducing reaction and means for controlling the composition of the reduced gas by oxidation.

BRIEF DESCRIPTION OF THE DRAWINGS

Figure 1 is a schematic view of one embodiment of an apparatus for treating a gas containing $SO_2$.

Figure 2 is a schematic view of another embodiment of an apparatus for treating a gas containing $SO_2$.

Figure 3 is a flow diagram to illustrate a process for producing sulphur from a gas containing $SO_2$ by the Claus reaction.

Figure 4 is a schematic view of a further embodiment of an apparatus for treating a gas containing $SO_2$.

DETAILED DESCRIPTION

The present invention is based on treating a gas containing $SO_2$ by reduction and controlling the composition of the gas by oxidation, preferably performed in adjacent reactors or in the same reactor.

In the present invention, carbonaceous materials such as coal and coke and reducing gases such as carbon monoxide and hydrogen can be used as a reducing agent and air or other oxygen-containing gases can be used as an oxidizing agent.

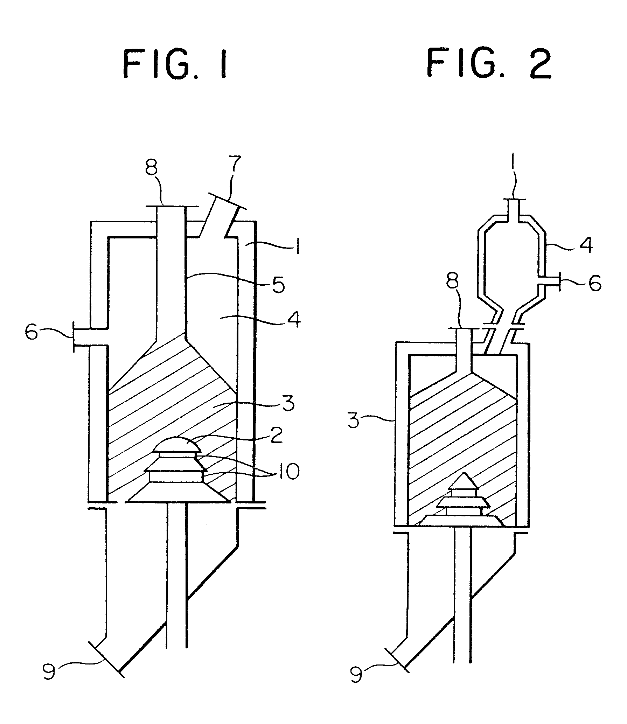

In the apparatus shown in Figure 1, a gas containing $SO_2$ is fed to a treatment apparatus 1 from an inlet 10, brought into contact with a carbonaceous material at a temperature between 600 to 1000°C in a reducing part 3 filled with carbonaceous material. About 80 to 100% of $SO_2$ in the inlet gas is reduced to sulphur, hydrogen sulphide, carbonyl sulphide, etc. The reducing part 3 is preferably a moving bed reactor filled with a carbonaceous material supplied from an inlet 8 by way of a chute 5. The resultant ash and non-fired carbonaceous material are discharged from an exhaust port 9. 2 represents a grate for discharging the carbonaceous material.

The temperature of the reducing part 3 can be maintained by feeding air or an oxygen-containing gas separately or together with the raw inlet gas so as to burn a part of the reducing agent.

The thus reduced gas is partially oxidized by air fed from an air inlet 6 in a composition controlling part 4 (combustion chamber) provided above the reducing reaction part 3 preferably at a temperature of 500 to 900°C to form sulphur oxide, whereby the ratio of hydrogen sulphide and sulphur dioxide, i.e. the value of $(H_2S + COS + 0.5CS_2)/SO_2$ is adjusted to 1.50 to 2.50, preferably 1.90 to 2.10, suitable for the Claus reaction, and then discharged from a gas outlet 7. The rate of the oxidation reaction can be freely controlled by changing the quantity of air supplied.

Figure 2 shows another embodiment of an apparatus for treating a sulphur dioxide-containing gas according to the present invention, in which a composition controlling reactor 4 is adjacent to a reducing reactor 3, the other parts corresponding to those described with reference to Figure 1.

When a combination of a carbonaceous material and a reducing gas is employed, the apparatus of Figure 1 or Figure 2 can be used as described. The reducing gas may be supplied together with the gas containing $SO_2$ from the gas inlet 10. If a reducing gas is used alone, the temperature should be maintained by burning either a part of the reducing gas or fuel supplied for the purpose.

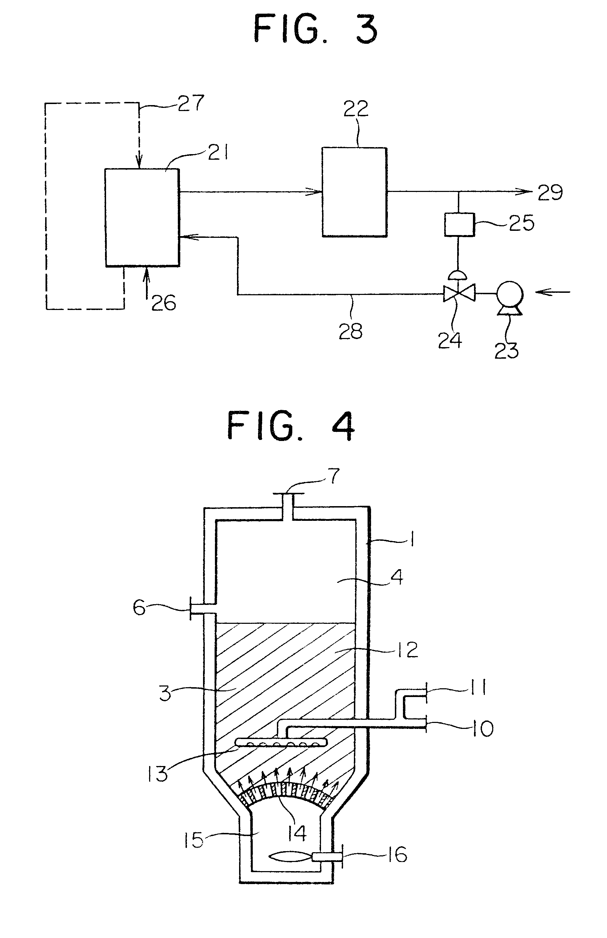

One example of a process for treating gas containing $SO_2$ is shown in Figure 3. A gas 26 containing $SO_2$ is fed to an apparatus 21 in which the gas is subjected to a partial or complete reduction of $SO_2$ then oxidized again to provide a composition suitable for the Claus reaction, subjected to removal of by-produced sulphur in a condenser (not shown) and then fed to a Claus reactor 22. The condenser may be omitted. An air supply 23 provides air for the composition controlling reaction. The rate of air flow is being controlled by valve 24 according to the ratio of $H_2S$ and the other necessary components to $SO_2$ in a tail gas 29 of the Claus reaction. The ratio is determined by a meter 25.

Figure 4 shows a further embodiment of an apparatus for treating gas containing $SO_2$, the apparatus comprising gas inlets 10 and 11 for raw material gas and reducing gas respectively, packing 12 such as broken bricks, a gas injection pipe 13, a fire grate 14, a combustion chamber 15 and a burner 16.

There are in general several advantages arising from the preferred practice of the invention. Since reduction and the control of composition by oxidization can be performed in a single reactor or in a series of adjacent reactors, a combustion furnace for contolling the composition is not needed. Therefore, a supply of air for the combustion of liquefied petroleum gas, etc, is not required, so there is no increase of the process gas and the concentration of the reaction components can be higher. Furthermore, the contact time with a catalyst in a Claus reactor can so be lengthened to improve the efficiency of recovery of sulphur. The tail or exhaust gas of the Claus reaction is decreased. Moreoover, a temperature of 500 to 800 °C can readily be maintained by the combustion of combustible components in the reduced gas without using fuels such as liquefied petroleum gas. Furthermore, it is possible to contol the furnace temperature in the composition controlling part and the composition of the gas for the Claus reaction by controlling only the supply of air, control of the operation and composition is easy. In addition, whereas a gas containing $SO_2$ and obtained by a dry process which removes $SO_x$ and $NO_x$ using ammonia contains up to 1% ammonia in some cases, according to the present invention gas can be treated such that the ammonia is substantially decomposed to give a low concentration, e.g. 500 to 1500 ppm, and a subsequent Claus reaction is scarcely affected. Finally, a gas containing $SO_2$ and obtained by a process of removing $SO_x$ or $SO_x$ and $NO_x$ contains sulphur trioxide. However sulphur trioxide can be reduced by treating the whole gas according to the present invention and thus corrosion due to formation of sulphuric acid can be prevented.

The following example is given in order to illustrate the present invention without limiting the same.

Example 1

Using an apparatus as shown in Figure 1 and coke as a reducing agent, a raw material gas having a composition of 20-25% $H_2O$, 20-25% $SO_2$, 25-35% $N_2$ and 20-30% $CO_2$ was treated to produce sulphur according to the process as shown in Figure 3. The gas flow rate was 40-50 $m^3$/hr, the temperature in the reducing part was of 700 to 800°C, maintained by feeding air from the gas inlet 10 and burning the reducing agent. The temperature in the past was 600 - 700°C and thus the gas for the Claus reaction was controlled to give an $H_2S$ etc./$SO_2$ ratio of 1.95 to 2.05. Sulphur was prepared with a yield of 90 to 95% and a purity of elementary sulphur of at least 99.99%.

Example 2

The procedure of Example 1 was repeated except that a gas having a composition of 40-45% $H_2O$, 25-35% $SO_2$, 15-20% $N_2$ and 10-15% $CO_2$ was treated at a gas flow rate of 55-60 $m^3$/hr, the reducing reaction temperature was 800-1000°C and the composition controlling reaction temperature was 700 to 850°C, thus obtaining results of an $H_2S$ etc/$SO_2$ ratio of 1.95-2.05, sulphur recovery yield of 93-97% and sulphur purity of at least 99.99%.

Example 3

Using an apparatus packed with broken bricks to form a fixed bed as shown in Figure 4 and a coke oven gas having a composition of 55% $H_2$, 30% $CH_4$, 7% CO, 1% $O_2$ and the balance $N_2$ and $CO_2$, a gas having a composition of 20-25% $H_2O$, 20-25% $SO_2$, 25-35% $N_2$ and 20-30% $CO_2$ was treated to produce sulphur according to the process as shown in Figure 3. Flow rate of the raw material gas was 8 $m^3$/hr, the reducing reaction temperature was 700 to 800°C and the composition controlling temperature was 600 to 700°C. The raw gas provided for the Claus reaction was controlled to give an $H_2S$, etc./$SO_2$ ratio of 1.95 to 2.05. Sulphur was produced with a yield of 91 to 95% and a purity of at least 99.99%.

**Claims**

1.  A process for treating a gas containing sulphur dioxide which comprises subjecting the gas to a reducing reaction and controlling by oxidation the composition of the gas to render the composition suitable for the Claus reaction.

2.  A process according to claim 1, wherein a carbonaceous material is used as a reducing agent.

3.  A process according to claim 1 or claim 2, wherein a reducing gas is used as a reducing agent.

4.  A process according to any foregoing claim, wherein the reducing reaction is performed at a temperature between 600 and 1000°C.

5.  A process according to any foregoing claim, wherein the oxidation is performed at a temperature distribution of 500 to 900°C.

6.  A process according to any foregoing claim, wherein the said composition is controlled so as to give a ratio of ($H_2S$ + COS + 0.5 $CS_2$) to $SO_2$ of 1.5 to 2.5.

7.  A process according to any foregoing claim in which the said composition is controlled essentially by the supply of air.

8.  An apparatus for treating a gas containing sulphur dioxide, comprising means for subjecting the gas to a reducing reaction and means for controlling the composition of the reduced gas by oxidation, wherein the means for subjecting the gas to a reducing reaction is a moving bed employing carbonaceous material and the means for controlling the composition is a combustion chamber above the moving bed.

9.  An apparatus for treating a gas containing sulphur dioxide, comprising means for subjecting the gas to a reducing reaction and means for controlling the composition of the reduced gas by oxidation, wherein the means for subjecting the gas to a reducing reaction comprises a fixed bed of packing and a reducing gas and the means for controlling the composition is a combustion chamber above the fixed bed.

10. An apparatus according to Claim 8 or Claim 9, wherein the means for subjecting the gas to a reducing reaction and the means for controlling the composition of the reduced gas by oxidation are provided in the same reaction vessel.

11. An apparatus according to Claim 8 or Claim 9, wherein the means for subjecting the gas to a reducing reaction and the means for controlling the composition of the reduced gas by oxidation are provided adjacent to each other.

**Revendications**

1.  Procédé de traitement d'un gaz contenant du dioxyde de soufre, qui consiste à soumettre le gaz à une réaction de réduction et à contrôler par oxydation la composition du gaz pour rendre la composition appropriée pour la réaction de Claus.

**2.** Procédé suivant la revendication 1, caractérisé en ce qu'on utilise une matière carbonée comme agent réducteur.

**3.** Procédé suivant l'une ou l'autre des revendications 1 et 2, caractérisé en ce qu'on utilise un gaz réducteur comme agent réducteur.

**4.** Procédé suivant l'une quelconque des revendications précédentes, caractérisé en ce que la réaction de réduction est réalisée à une température entre 600 et 1000°C.

**5.** Procédé suivant l'une quelconque des revendications précédentes, caractérisé en ce que l'oxydation est réalisée à une distribution de température de 500 à 900°C.

**6.** Procédé suivant l'une quelconque des revendications précédentes, caractérisé en ce que la composition est contrôlée de manière à donner un rapport de ($H_2S$ + COS + 0,5 $CS_2$) à $SO_2$ de 1,5 à 2,5.

**7.** Procédé suivant l'une quelconque des revendications précédentes, caractérisé en ce que la composition est contrôlée essentiellement par l'apport d'air.

**8.** Appareil pour traiter un gaz contenant du dioxyde de soufre, comprenant un moyen pour soumettre le gaz à une réaction de réduction et un moyen pour contrôler la composition du gaz réduit par oxydation, dans lequel le moyen pour soumettre le gaz à une réaction de réduction est un lit mobile utilisant une matière carbonée et le moyen pour contrôler la composition est une chambre de combustion au-dessus du lit mobile.

**9.** Appareil pour traiter un gaz contenant du dioxyde de soufre, comprenant un moyen pour soumettre le gaz à une réaction de réduction et un moyen pour contrôler la composition du gaz réduit par oxydation, dans lequel le moyen pour soumettre le gaz à une réaction de réduction comprend un lit fixe de garnissage et un gaz réducteur et le moyen pour contrôler la composition est une chambre de combustion au-dessus du lit fixe.

**10.** Appareil suivant l'une ou l'autre des revendications 8 et 9, caractérisé en ce que le moyen pour soumettre le gaz à une réaction de réduction et le moyen pour contrôler la composition du gaz réduit par oxydation sont prévus dans le même récipient de réaction.

**11.** Appareil suivant l'une ou l'autre des revendications 8 et 9, caractérisé en ce que le moyen pour soumettre le gaz à une réaction de réduction et le moyen pour contrôler la composition du gaz réduit par oxydation sont adjacents.

**Patentansprüche**

**1.** Verfahren zur Behandlung eines Schwefeldioxid enthaltenden Gases, welches den Verfahrensschritt umfaßt, das Gas einer Reduktionsreaktion zu unterwerfen und die Zusammensetzung des Gases durch Oxidation zu steuern, um die Zusammensetzung für die Claus-Reaktion verwendbar zu machen.

**2.** Verfahren nach Anspruch 1, worin ein Kohlenstoff-haltiges Material als Reduktionsmittel verwendet wird.

**3.** Verfahren nach Anspruch 1 und 2, worin ein reduzierendes Gas als Reduktionsmittel verwendet wird.

**4.** Verfahren nach irgendeinem der vorangehenden Ansprüche, worin die Reduktionsreaktion bei einer Temperatur zwischen 600 und 1000°C durchgeführt wird.

**5.** Verfahren nach irgendeinem der vorangehenden Ansprüche, worin die Oxidation bei einer Temperaturverteilung von 500 bis 900°C durchgeführt wird.

**6.** Verfahren nach irgendeinem der vorangehenden Ansprüche, worin die Zusammensetzung so gesteuert wird, daß sie ein Verhältnis von ($H_2S$ + COS + 0,5 $CS_2$) zu $SO_2$ von 1,5 bis 2,5 ergibt.

**7.** Verfahren nach irgendeinem der vorangehenden Ansprüche, worin die Zusammensetzung im wesentlichen durch Zufuhr von Luft gesteuert wird.

**8.** Vorrichtung zur Behandlung eines Schwefeldioxid enthaltenden Gases, welche Einrichtungen dafür, das Gas einer Reduktionsreaktion zu unterwerfen, und Einrichtungen zur Steuerung der Zusammensetzung des reduzierenden Gases durch Oxidation umfaßt, worin die Einrichtung dazu, das Gas einer Reduktionsreaktion zu unterwerfen, ein Wirbelbett unter Verwendung eines Kohlenstoff-haltigen Materials ist und die Einrichtung zur Steuerung der Zusammensetzung eine Verbrennungskammer oberhalb des Wirbelbetts ist.

**9.** Vorrichtung zur Behandlung eines Schwefeldioxid enthaltenden Gases, welche Einrichtungen dafür, das Gas einer Reduktionsreaktion zu unterwerfen, und Einrichtungen zur Steuerung der Zusammensetzung des reduzierten Gases durch Oxidation umfaßt, worin die Einrichtung dafür, das Gas einer Reduktionsreaktion zu unterwerfen, ein Füllkörper-Festbett und ein reduzierendes Gas umfaßt, und die Einrichtung zur Steuerung der Zusammensetzung eine Verbrennungskammer oberhalb des Festbetts ist.

**10.** Vorrichtung nach Anspruch 8 oder Anspruch 9, worin die Einrichtung dafür, das Gas einer Reduktionsreaktion zu unterwerfen, und die Einrichtung zur Steuerung der Zusammensetzung des reduzierten Gases durch Oxidation in demselben Reaktionsgefäß bereitgestellt werden.

**11.** Vorrichtung nach Anspruch 8 oder 9, worin die Einrichtung dafür, das Gas einer Reduktionsreaktion zu unterwerfen, und die Einrichtung zur Steuerung der Zusammensetzung des reduzierten Gases durch Oxidation nahe beieinander bereitgestellt werden.

# FIG. 1

# FIG. 2

## FIG. 3

## FIG. 4